# EUROPEAN PATENT SPECIFICATION

(11) **EP 2 532 134 B1**
(45) Date of publication and mention of the grant of the patent: **12.06.2013**
(21) Application number: 10710537.1
(22) Date of filing: 26.02.2010
(51) Int. Cl.: H04L 29/06, H04L 29/08

(54) **A METHOD FOR PROCESSING A SOAP MESSAGE WITHIN A NETWORK AND A NETWORK**
VERFAHREN ZUR VERARBEITUNG EINER SOAP-NACHRICHT INNERHALB EINES NETZWERKS SOWIE NETZWERK
PROCÉDÉ DE TRAITEMENT D'UN MESSAGE SOAP DANS UN RÉSEAU ET RÉSEAU

(43) Date of publication of application: 12.12.2012
(73) Proprietor: NEC Europe Ltd., 69115 Heidelberg (DE)
(72) Inventor: GRUSCHKA, Nils, 25770 Hemmingstedt (DE); LO IACONO, Luigi, 53225 Bonn (DE)
(74) Representative: Ullrich & Naumann
(86) International application number: PCT/EP2010/001200
(87) International publication number: WO 2011/103886

(56) References cited:
- WO-A1-2009/030261
- XIAOLING CUI ET AL: "A Novel SOAP Attachment-Oriented Security Model", 17TH INTERNATIONAL SYMPOSIUM ON SOFTWARE RELIABILITY ENGINEERING, 2006. ISSRE '06. IEEE, PI, 1 November 2006 (2006-11-01), pages 127-135, XP031023137, ISBN: 978-0-7695-2684-3

## Description

The present invention relates to a method for processing a SOAP (Simple Object Access Protocol) message within a network, especially an IP (Internet Protocol) network, wherein the XML (Extended Markup Language) based SOAP message is comprising a fragment with a binary content, wherein the binary content will be moved into an MTOM (Message Transmission Optimization Mechanism) attachment of the SOAP message with a remaining reference to the binary content within the SOAP message and wherein the attachment will be signed and/or encrypted by a signing and encryption process, respectively. Further, the present invention relates to a network, especially an IP (Internet Protocol) network, wherein a W XML (Extendend Markup Language) based SOAP (Simple Object Access Protocol) message will be processed, wherein the SOAP message is comprising a fragment with a binary content, wherein the binary content will be moved into an MTOM (Message Transmission Optimization Mechanism) attachment of the SOAP message with a remaining reference to the binary content within the SOAP message and wherein the attachment will be signed and/or encrypted by a signing and encryption process, respectively.

WO 2009/030261 A1 discloses a method for processing a SOAP message with all features of the preamble part of claim 1, wherein a digital signature is placed in an additional attachment at the end of or stream.

It is a well-known fact, that processing XML messages is very resource consuming compared to binary message formats. This property is impaired if the message or message parts are signed or encrypted using XML security means (XML Signature, XML Encryption). The above stated is of course also true for SOAP messages as SOAP is XML-based and the used security means - WS-Security (Web Services Security) - base on XML security. As a consequence Web Service framework developers working since some years on optimization of the message processing flow. One promising approach is the streaming processing paradigm. For unsecured messages it is already adopted, e.g. in the Web Service framework Apache Axis2, and for secured messages first results are visible.

Further documents giving information about the current technology, especially XML encryption and signing procedures and streaming processing of according messages are as follows:

Further, Xiaoling Cui et al. : "A novel SOAP Attachment-Oriented Security Model", 17th International Symposium on Software Reliability Engineering, 2006 (ISSRE '06) discloses a method wherein an intermediate entity reconstructs the SOAP message and validates the attachments in a single pass, but it has to wait for all the attachments to be received to perform the security validation.
1. Bartel, Mark, Boyer, John, Fox, Barb, LaMacchia, Brian, and Simon, Ed: XML Signature Syntax and Processing, W3C Recommendation, 2002.
2. Imamura, Takeshi, Dillaway, Blair, and Simon, Ed: XML Encryption Syntax and Processing, W3C Recommendation, 2002.
3. Gudgin, Martin, Mendelsohn, Noah, Nottingham, Mark, and Ruellan, Herve: SOAP Message Transmission Optimization Mechanism, W3C Recommendation, 2005.
4. Gruschka, Nils, Luttenberger, Norbert, and Herkenhöner, Ralph: Event-based SOAP Message Validation for WS-SecurityPolicy-enriched Web Services, Proceedings of the 2006 International Conference on Semantic Web & Web Services, 2006.
5. Govindaraju, Madhusudhan, Slominski, Aleksander, Chiu, Kenneth, Liu, Pu, van Engelen, Robert, and Lewis, Michael J.: Toward Characterizing the Performance of SOAP Toolkits, Proceedings of the Fifth IEEE/ACM International Workshop on Grid Computing (GRID'04), IEEE Computer Society, 365-372, 2004.
6. Lu, Wei, Chiu, Kenneth, Slominski, Aleksander, and Gannon, Dennis: A Streaming Validation Model for SOAP Digital Signature, In The 14th IEEE International Symposium on High Performance Distributed Computing (HPDC-14),2005.
7. Imamura, Takeshi, Clark, Andy, and Maruyama, Hiroshi: A stream-based implementation of XML Encryption, XMLSEC '02: Proceedings of the 2002 ACM workshop on XML security, ACM Press, 11-17, 2002.

The basic problem of SOAP message processing is its high resource consumption. Resource consumption is even higher when message parts are encrypted or signed. Streaming message processing is one method for reducing resource consumption. However, secured MTOM attachments inhibit streaming one-pass processing from the network stream.

More precisely, streaming message processing is not feasible any more, if the SOAP message: (1) uses MTOM attachments and (2) one or more of these attachments are secured using WS-Security. The reason is explained in the following. The binary part of the SOAP document to be transported as an attachment is replaced by an MTOM reference. On the network first this SOAP document and then the binary part is sent as an MTOM attachment. However, the attachment is virtually embedded inside the SOAP message at the reference location. For a number of typical operations on the SOAP document - like extracting or moving document subtrees - this property can be neglected. However, for some other operations - including hash value calculation for signature verification or decrypting encrypted content - the attachment must be completely read at the moment of processing the reference inside the SOAP message. Hence, in this case the one-pass streaming processing of the message is broken.

It is an object of the present invention to improve and further develop a method for processing a SOAP message within a network and an according network for allowing a streaming processing of SOAP messages with signed and/or encrypted MTOM attachments in a simple way.

In accordance with the invention, the aforementioned object is accomplished by a method comprising the features of claim 1 and a network comprising the features of claim 13.

According to claim 1 the method is characterized in that during signing process in addition to the hash of the signed fragment itself the same fragment excluding the binary content will be hashed and/or during encryption process in addition to the encryption of the fragment itself the fragment including only the reference to the binary content instead of the binary content will be encrypted.

According to claim 13 the network is characterized by hashing means, which are adapted in a manner, that during signing process in addition to the hash of the signed fragment itself the same fragment excluding the binary content can be hashed and/or by encryption means, which are adapted in a manner, that during encryption process in addition to the encryption of the fragment itself the fragment including only the reference to the binary content instead of the binary content can be encrypted.

According to the invention it has been recognized that it is possible to allow a streaming processing of SOAP messages with signed and/or encrypted MTOM attachments by simply adding additional information about the signed and/or encrypted attachment to the outgoing SOAP message. Concretely, during signing process in addition to the hash of the signed fragment itself the same fragment excluding the binary content will be hashed and can be added to the SOAP message in a suitable way. Accordingly, during encryption process in addition to the encryption of the fragment itself the fragment including only the reference to the binary content - instead of the binary content - will be encrypted. This additional information can also be added to the outgoing SOAP message. During processing of the SOAP message at a server side a one-pass streaming processing of SOAP messages with signed and/or encrypted MTOM attachments will be possible on the basis of the additional parts added to the outgoing SOAP message.

Preferably, during signing and/or encryption process the binary content could be present within the fragment in text encoded form, preferably base64 encoded. Based on such a text encoded form usual signing and encryption technologies can be used during signing and/or encryption process.

During the inventive method and especially during signing process based on the additionally hashed fragment - excluding the binary content - an additional block could be created for use within a transport protocol. Preferably, such an additional block could be a transform block which could be added to a transform element of the respective signature. Based on the above mentioned steps a simple extension to usual SOAP messages is possible for allowing one-pass streaming processing of SOAP messages.

With regard to a further preferred embodiment of the invention based on the additionally encrypted fragment - including only the reference to the binary content - an encryption property could be created for use within a transport protocol. Such an encryption property could be simply added to an encryption block for one-pass streaming at the server side for message processing.

Preferably, the encryption property could be present in text encoded form, preferably base64 encoded. Thus, usual encryption technologies could be used during the inventive method.

With regard to a very simple and effective method the reference to the binary content could be an XOP (XML-binary Optimized Packaging) reference. Such an XOP reference can provide the possibility to move binary content out of a message with only a remaining reference part within the original message.

With regard to a very effective one-pass streaming processing the SOAP message could be serialized for a server side one-pass streaming processing.

With regard to a very effective processing of the SOAP message during server side processing calculations of hash values could be performed in parallel each in a one-pass streaming manner.

For providing a very simple and reliable method WS-Security (Web Services Security) could be used for signing and/or encryption processes. Thus, the use of known signing and/or encryption technologies is possible for simplifying the above method.

The kind of binary content within the fragment is not limited to any specific application. Within a preferred embodiment, the binary content could be a photo, a medical image or software binaries.

The present invention introduces an extension to current Web Services security specifications and message processing methods to overcome the aforementioned problem and thus to enable streaming processing of SOAP messages with encrypted and/or signed MTOM attachments. To be more specific, this invention defines extensions for the Web Services security specifications XML Signature and XML Encryption. These extensions are added by a Web Services client - which supports the mechanisms defined in the present invention - to the outgoing SOAP message and contain additional information about the signed or encrypted attachment. A Web Services server - which supports the mechanisms defined in the present invention - can use these extensions to efficiently process this message in a one-pass streaming manner. This leads to higher performance and reduced resource consumption at the server side. However, as the standardized message format is not changed, the signature and the encryption inside the SOAP message can also still be processed by Web Services servers which do not support the mechanisms defined in the present invention.

The present invention is providing an extension for SOAP security in conjunction with MTOM attachments. There is provided one-pass server-side streaming processing of the complete SOAP message including attachments. The result is a higher performance and reduced resource consumption for Web Services servers. Full backward compatibility with current standards and frameworks is present.

There are several ways how to design and further develop the teaching of the present invention in an advantageous way. To this end, it is to be referred to the patent claims subordinate to patent claim 1 on the one hand, and to the following explanation of preferred examples of embodiments of the invention, illustrated by the drawing on the other hand. In connection with the explanation of the preferred embodiments of the invention by the aid of the drawings, generally preferred embodiments and further developments of the teaching will be explained. In the drawings
- Fig. 1: is illustrating a standard format and serialization of MTOM SOAP messages,
- Fig. 2: is illustrating a standard format, processing and serialization of signed MTOM SOAP messages,
- Fig. 3: is illustrating a standard format, processing and serialization of encrypted MTOM SOAP messages,
- Fig. 4: is illustrating an embodiment for creating signed MTOM SOAP messages according to the invention,
- Fig. 5: is illustrating an embodiment for creating encrypted MTOM SOAP messages according to the invention,
- Fig. 6: is illustrating an embodiment for server-side processing of signed MTOM SOAP messages according to the invention and
- Fig. 7: is illustrating an embodiment for server-side processing of encrypted MTOM SOAP messages according to the invention.

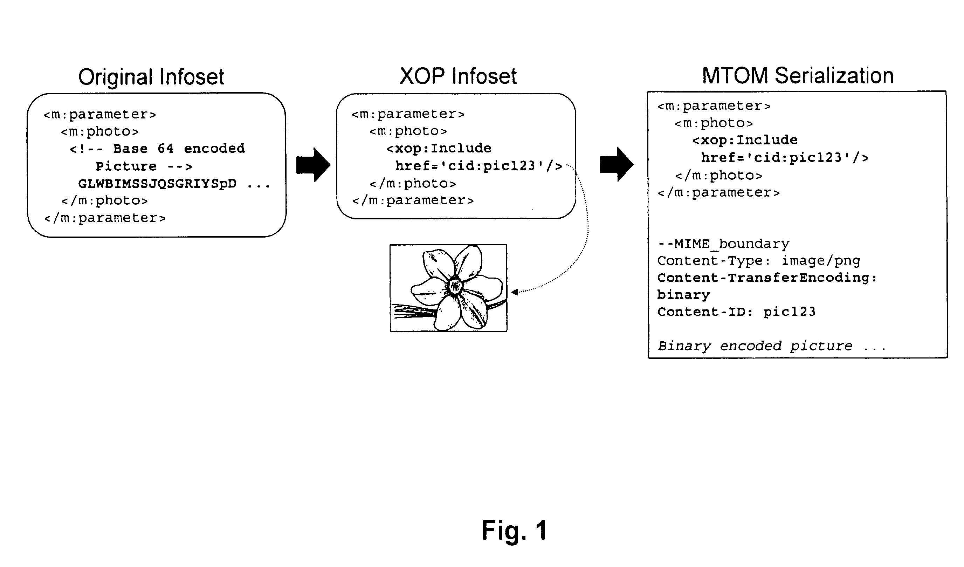

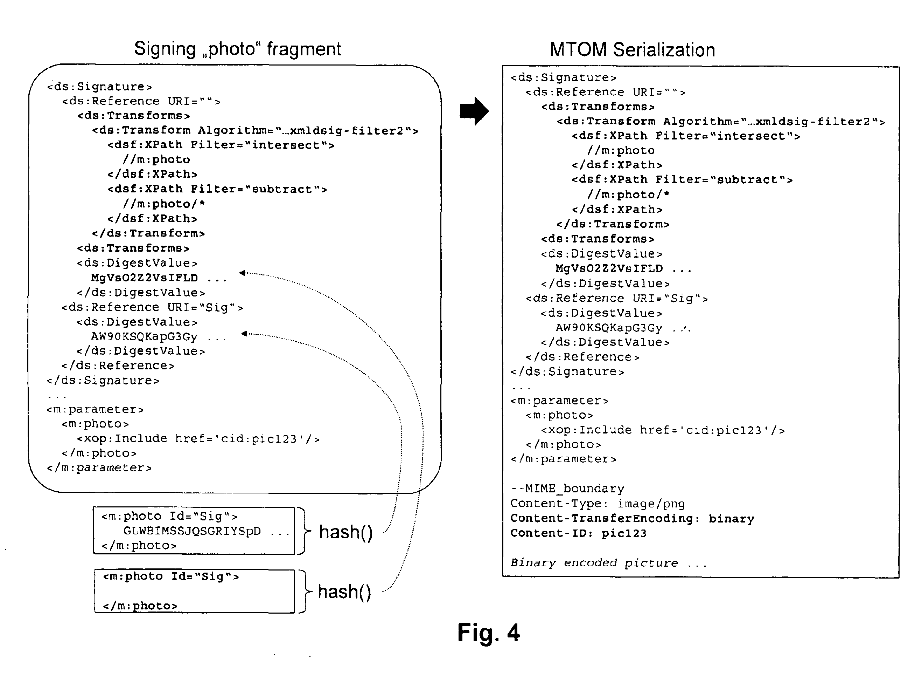

The following Fig. 1 to 7 explain the invention and its embodiments. Fig. 1 to 3 show the standard approach for creating secured and encrypted MTOM messages. Fig. 4 to 7 show the method of the present invention.

Fig. 1 is illustrating a standard format and serialization of MTOM SOAP messages. This Fig. 1 illustrates how MTOM attachments are created. On the left hand, one can see a SOAP message fragment with binary content - here: a photo. As XML is a text format, binary content can only be transported in text encoded form. The most common form for this is the base64 encoding. This kind of handling of - especially large - binary content creates some problems. Mainly, the usage of base64 increases the space consumption in memory and on the network (33%). Additionally, handling of the large SOAP document is more difficult and resource consuming. To overcome these problems, in the past several possibilities for removing these logical "external document parts" from the SOAP message and transporting them as an attachment have been published. Amongst these, MTOM is regarded as the best approach as it eliminates some shortcomings of e.g. SwA (SOAP with Attachments).

As shown in Fig. 1, MTOM uses the so-called XOP infoset for storing messages inside the memory. By this, the binary data - here: a photo - is kept in its original form outside the SOAP message which solely includes a reference (<xop:Include>) to the binary file.

Finally, on the right hand side of the figure one can see how the XOP infoset is transported over the network: the serialized XML part and the binary part are transported as separate MIME (Multipurpose Internet Mail Extensions) blocks inside the transport protocol, typically HTTP (HyperText Transfer Protocol). This way, the binary part can be transported as-it-is - without encoding - as an attachment to the SOAP message.

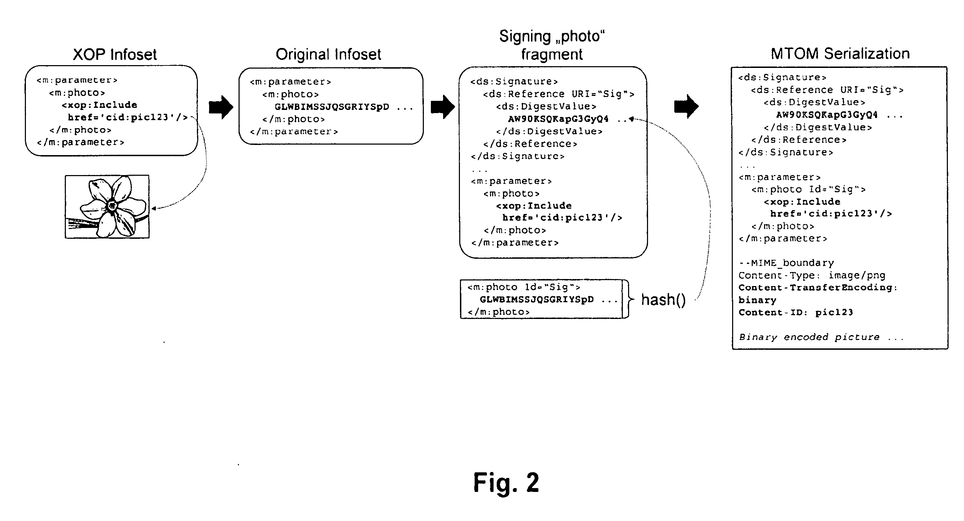

Fig. 2 is illustrating a standard format, processing and serialization of signed MTOM SOAP messages. Fig. 2 shows the signature creation process for an MTOM enabled SOAP message. An important property of the XOP infoset is that the <xop:Include> reference is "by value" reference, i.e. all operations must treat the XML document as well as the binary content which is embedded inside the document. For a number of operations, e.g. moving the <m:photo> node, this does not need to be considered, as operating on the XOP infoset or on the original infoset is equivalent. However, for a signing operation which requires reading and hashing the complete content of a signed node this property must be adhered to.

Thus, as shown in Fig. 2 before signing a node that includes an MTOM attachment the attachment must be embedded into the XML document, which actually rebuilds the original infoset. Then, the node can be signed, including hashing the base64 encoded binary attachment. After signature calculation the XOP part can be restored - not shown in Fig. 2 - and the binary part can be transported as attachment again.

If such a serialization is processed at the server side, this can not be done in a one-pass streaming manner. After processing the <m:photo> node, the hash calculation must be paused until the attachment has been completely received so that the hash calculation can be performed, which causes a blocking behavior for the SOAP processing.

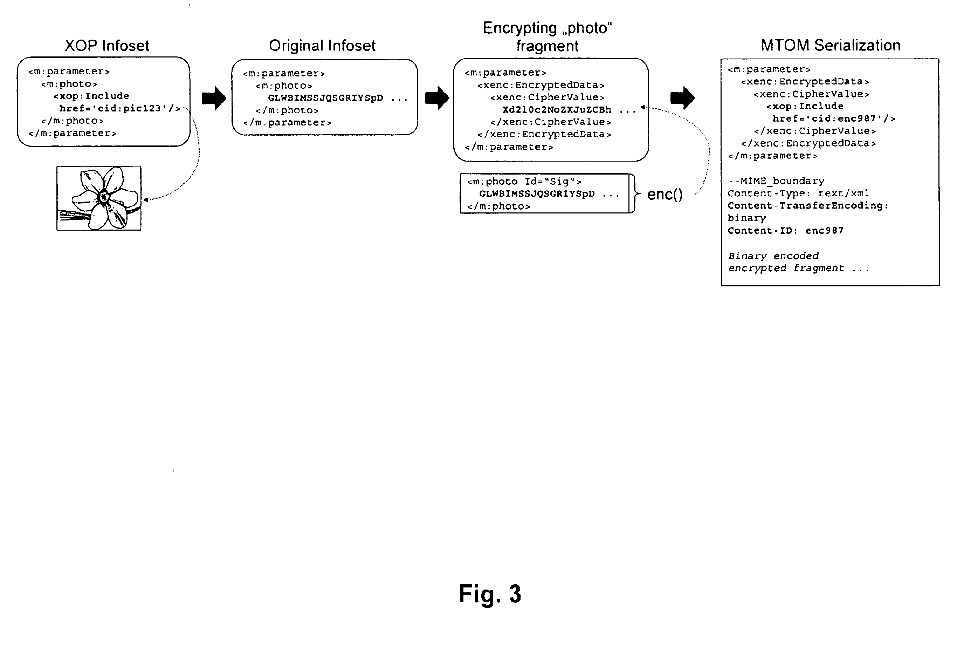

Fig. 3 is illustrating a standard format, processing and serialization of encrypted MTOM SOAP messages. This figure illustrates the way to encrypt a SOAP message fragment containing an MTOM attachment. Again, before applying the encryption operation, the attachment must be re-embedded - and base64 encoded - into the XML document. After encryption, the XML encryption block replaces the encrypted block, in the example above the <m:photo> element. This encryption block again includes a - base64 encoded - binary content node: the content of the <xenc:CipherData> element. This binary content can then be extracted from the XML document and serialized as an MTOM attachment. It must be noted, that - in contrast to signature creation - the attachment of the encrypted message is not the same as in the unencrypted message.

As parts of the unencrypted XML document - here: the <m:photo> wrapper - have been moved by the encryption process to the attachment, again, the processing, i.e. decryption, at the server side can not be performed in a one-pass streaming manner.

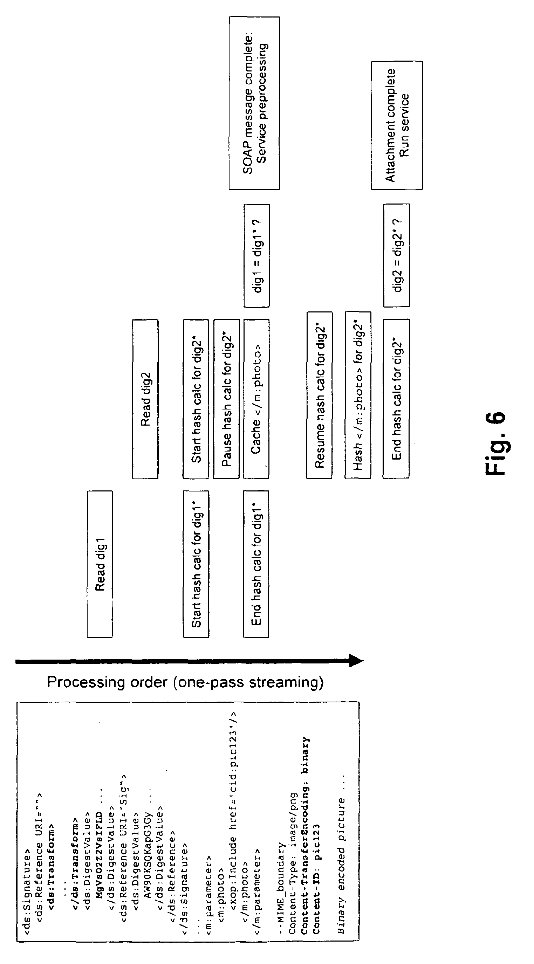

Fig. 4 is illustrating an embodiment of a method for creating signed MTOM SOAP messages according to the invention. This Fig. 4 shows the inventive approach for creating an XML signature for a fragment which contains an MTOM attachment. The resulting message allows one-pass streaming processing on the server side, see Fig. 6 below. The details of the signing process are as follows: in addition to the hash of the signed fragment itself - in the example above <m:photo> - the same fragment - excluding the binary content - is hashed. Therefore the following transform block is added to the <ds:Transforms> element of the respective signature:

```
 <ds:Transform Algorithm="http://www.w3.org/2002/06/xmldsig-filter2">
 <dsf:XPath Filter="intersect">
  xpath-of-signed-element
 </dsf:XPath>
 <dsf:XPath Filter="subtract">
  xpath-of-wrapping-element/*
 </dsf:XPath>
 </ds:Transform>
```

| Prefix | Namespace |
|---|---|
| dsf | http://www.w3.org/2002/06/xmldsig-filter2 |
| ds | http://www.w3.org/2000/09/xmldsig# |

The values xpath-of-signed-element and xpath-of-wrapping-element must be replaced by XPath expressions referring to the element to be signed and the parent element of the binary content ("wrapping element"). In the example used in the Fig. 4 both expressions are //m:photo.

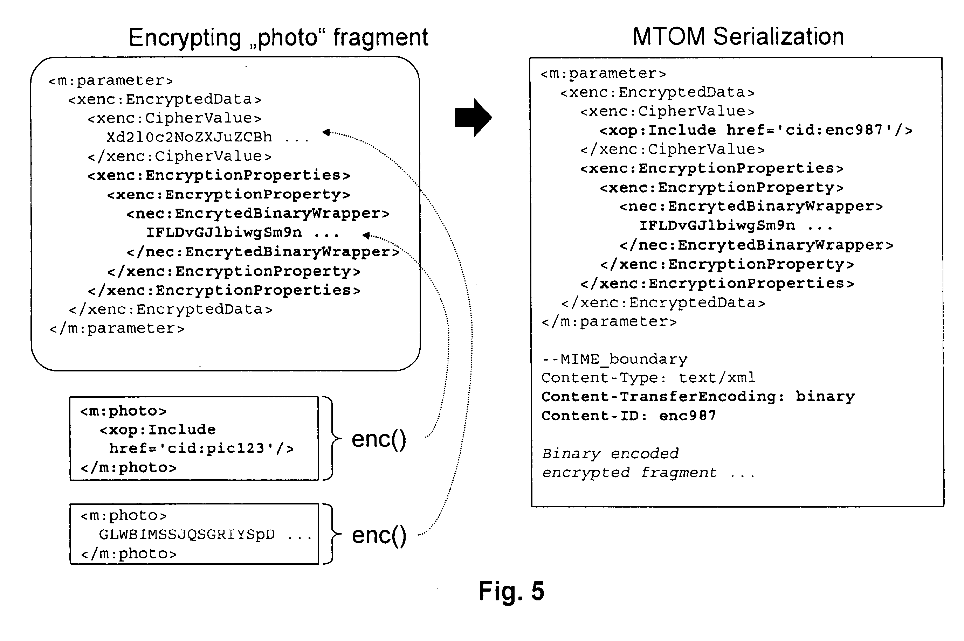

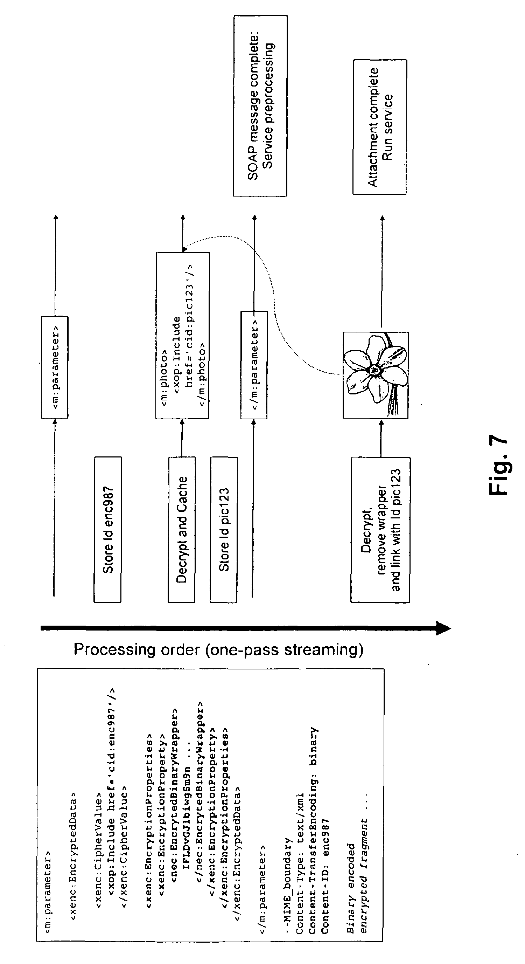

Fig. 5 is illustrating an embodiment of a method for creating encrypted MTOM SOAP messages according to the invention. This Fig. 5 shows the inventive approach for encrypting a fragment which contains an MTOM attachment. The resulting message allows one-pass streaming processing on the server side, see Fig. 7 below. The details of the encryption process are as follows: in addition to the fragment from the "original infoset" - in the example above the element <m:photo> including the binary content - the same fragment from the "XOP infoset" - in the example above the element <m:photo> including the XOP reference - is encrypted. The result of the second encryption operation is added - base64 encoded - as an encryption property to the encryption block. To be more precise, the following element is added to the <xenc:EncryptionProperties> block:

```
 <xenc: EncryptionProperty>
 <nec: EncrytedBinaryWrapper>
  encrypted-xop-infoset-fragment
 </nec:EncrytedBinaryWrapper>
 </xenc: EncryptionProperty>
```

| Prefix | Namespace |
|---|---|
| xenc | http://www.w3.org/2001/04/xmlenc# |
| nec | http://www.neclab.eu/2010/10/secmtom |

Finally, while serializing the SOAP message the content of the <xenc:CipherValue> is extracted as an MTOM attachment, while the content of the <nec:EncrytedBinaryWrapper> remains inside the XML document. As attachments are intended for large binary attachments and the wrapper is assumed to be rather small, this is conform to the principles of attachments.

Fig. 6 is illustrating an embodiment for server-side processing of signed MTOM SOAP messages according to the invention. This Fig. 6 shows the proposed server-side processing of signed messages created using the approach present before, see Fig. 4. One can see, that the calculations of the two hash values - dig1 and dig2 - are performed in parallel each in a one-pass streaming manner. During one-pass streaming the caching of the closing wrapping elements - in the example above the </m:photo> element - will be performed. However, based on the assumption that the wrapping element is rather small this implies only little memory consumption.

One can see, that after reading the last SOAP message element, the XOP infoset version of the message can be verified.

Fig. 7 is illustrating an embodiment for server-side processing of encrypted MTOM SOAP messages. This Fig. 7 shows the proposed server-side processing of encrypted messages created using the approach present before, see Fig. 5. One can see, that the encrypted elements of the XOP infoset are created and forwarded to the service application in a streaming manner. During one-pass streaming the caching of the wrapping elements will be performed, which is needed to remove the wrapper during decrypting the attachment.

One can see, that after reading the last SOAP message element, the XOP infoset version of the message is completely decrypted.

The above presented inventive approaches for signature and encryption can of course be seamlessly combined for providing diverse applications. Thus nested security mechanisms are fully supported.

The advantages of the present invention are: first, the method enables server-side message processing in a streaming manner at all, which in general leads to large resource reduction compared to document based methods. Additionally, as the SOAP message is completely decrypted and verified after reading the last SOAP element - i.e. before reading the attachment - the method enables an "early preprocessing" for e.g. starting device tasks, which do not require the attachment, or enables detecting and rejecting invalid message calls without wasting resources on attachment processing.

The present invention is providing an extension of SOAP message format and processing in the context of secured MTOM attachments. This novel use of secured SOAP/MTOM message format is providing a one-pass streaming server-side processing of signed and/or encrypted MTOM SOAP messages.

The result of the inventive method is a reduction of memory consumption and computational costs for server-side message processing (green computing). The inventive method is providing full compatibility to involved standards and with existing Web Service frameworks.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for processing a SOAP (Simple Object Access Protocol) message within a network, especially an IP (Internet Protocol) network, wherein the XML (Extended Markup Language) based SOAP message is comprising a fragment with a binary content, wherein the binary content will be moved into an MTOM (Message Transmission Optimization Mechanism) attachment of the SOAP message with a remaining reference to the binary content within the SOAP message and wherein the attachment will be signed and/or encrypted by a signing and encryption process, respectively,
**characterized in that** during signing process in addition to the hash of the signed fragment itself the same fragment excluding the binary content will be hashed and/or during encryption process in addition to the encryption of the fragment itself the fragment including only the reference to the binary content instead of the binary content will be encrypted.

2. A method according to claim 1, wherein during signing and/or encryption process the binary content is present within the fragment in text encoded form, preferably base64 encoded.

3. A method according to claim 1 or 2, wherein based on the additionally hashed fragment excluding the binary content an additional block will be created for use within a transport protocol.

4. A method according to claim 3, wherein the additional block is a transform block which will be added to a transform element of the respective signature.

5. A method according to one of claims 1 to 4, wherein based on the additionally encrypted fragment including only the reference to the binary content an encryption property will be created for use within a transport protocol.

6. A method according to claim 5, wherein the encryption property will be added to an encryption block.

7. A method according to claim 5 or 6, wherein the encryption property is present in text encoded form, preferably base64 encoded.

8. A method according to one of claims 1 to 7, wherein the reference to the binary content is an XOP (XML-binary Optimized Packaging) reference.

9. A method according to one of claims 1 to 8, wherein the SOAP message will be serialized for a server side one-pass streaming processing.

10. A method according to claim 9, wherein during server side processing calculations of hash values will be performed in parallel.

11. A method according to one of claims 1 to 10, wherein WS-Security (Web Services Security) will be used for signing and/or encryption processes.

12. A method according to one of claims 1 to 11, wherein the binary content is a photo, a medical image or software binaries.

13. A network, especially an IP (Internet Protocol) network, comprising mean for processing an XML (Extended Markup Language) based SOAP (Simple Object Access Protocol) message , wherein the SOAP message comprises a fragment with a binary content, wherein said processing means are adapted to more the binary content into an MTOM (Message Transmission Optimization Mechanism) attachment of the SOAP message with a remaining reference to the binary content within the SOAP message and to sign and/or encrypt the attachment by a signing and encryption process, respectively,
**characterized by** hashing means, which are adapted to generate, during the signing process in addition to a hash of the signed fragment itself a hash of same fragment excluding the binary content can be hashed and/or by encryption means, which are adapted to encrypt, during the encryption process, the fragment itself and to encrypt the fragment including only the reference to the binary content instead of the binary content.

## Patentansprüche

1. Ein Verfahren zum Verarbeiten einer SOAP(Zugangsprotokoll für einfache Objekte, Simple Object Access Protocol)-Nachricht innerhalb eines Netzwerks, insbesondere eines IP(Internet Protokoll)-Netzwerks, wobei die XML(erweiterbare Auszeichnungssprache, Extended Markup Language)-basierte SOAP-Nachricht ein Fragment mit einem binären Inhalt aufweist, wobei der binäre Inhalt in einen MTOM (Nachrichtenübertragungsoptimierungsmechanismus, Message Transmission Optimization Mechanism)-Anhang der SOAP-Nachricht mit einer verbleibenden Referenz zu dem binären Inhalt innerhalb der SOAP-Nachricht bewegt wird und wobei der Anhang durch ein Signier- bzw. Verschlüsselungsverfahren signiert und/oder verschlüsselt wird,
**dadurch gekennzeichnet, dass** während des Signierverfahrens zusätzlich zu dem Hashen des signierten Fragments selbst das selbe Fragment mit Ausnahme des binären Inhalts gehasht wird und/oder während des Verschlüsselungsverfahrens zusätzlich zu der Verschlüsselung des Fragments selbst das Fragment einschließlich lediglich der Referenz zu dem binären Inhalt anstelle des binären Inhalts verschlüsselt wird.

2. Ein Verfahren nach Anspruch 1, wobei während des Signier- und/oder Verschlüsselungsverfahrens der binäre Inhalt innerhalb des Fragments in textkodierter Form vorliegt, vorzugsweise base64-kodiert.

3. Ein Verfahren nach Anspruch 1 oder 2, wobei basierend auf dem zusätzlich gehashten Fragment mit Ausnahme des binären Inhalts ein zusätzlicher Block zur Verwendung innerhalb eines Transportprotokolls erzeugt wird.

4. Ein Verfahren nach Anspruch 3, wobei der zusätzliche Block ein Transformierungsblock ist, der zu einem Transformierungselement der jeweiligen Signatur hinzugefügt wird.

5. Ein Verfahren nach einem der Ansprüche 1 bis 4, wobei basierend auf dem zusätzlich verschlüsselten Fragment einschließlich lediglich der Referenz zu dem binären Inhalt eine Verschlüsselungseigenschaft zur Verwendung innerhalb eines Transportprotokolls erzeugt wird.

6. Ein Verfahren nach Anspruch 5, wobei die Verschlüsselungseigenschaft zu einem Verschlüsselungsblock hinzugefügt wird.

7. Ein Verfahren nach Anspruch 5 oder 6, wobei die Verschlüsselungseigenschaft in textkodierter Form vorliegt, vorzugsweise base64-kodiert.

8. Ein Verfahren nach einem der Ansprüche 1 bis 7, wobei die Referenz zu dem binären Inhalt eine XOP(XML-binäres optimiertes Packaging)-Referenz ist.

9. Ein Verfahren nach einem der Ansprüche 1 bis 8, wobei die SOAP-Nachricht für ein serverseitiges Einpass-Streaming-Verfahren serialisiert wird.

10. Ein Verfahren nach Anspruch 9, wobei während des serverseitigen Verfahrens Berechnungen von Hash-Werten parallel durchgeführt werden.

11. Ein Verfahren nach einem der Ansprüche 1 bis 10, wobei WS-Sicherheit (Web Services Security) bei den Signier- und/oder Verschlüsselungsverfahren verwendet wird.

12. Ein Verfahren nach einem der Ansprüche 1 bis 11, wobei der binäre Inhalt ein Foto, ein medizinisches Bild oder Software-Binärdateien ist oder sind.

13. Ein Netzwerk, insbesondere ein IP(Internet Protokoll)-Netzwerk, umfassend Mittel zum Verarbeiten einer XML(Extended Markup Language)-basierten SOAP(Simple Object Access Protocol)-Nachricht, wobei die SOAP-Nachricht ein Fragment mit einem binären Inhalt aufweist, wobei die Verarbeitungsmittel zum Bewegen des binären Inhalts in einen MTOM(Message Transmission Optimization Mechanism)-Anhang der SOAP-Nachricht mit einer verbleibenden Referenz zu dem binären Inhalt innerhalb der SOAP-Nachricht und zum Signieren und/oder Verschlüsseln des Anhangs durch ein Signier- bzw. Verschlüsselungsverfahren angepasst sind,
**gekennzeichnet durch** Hash-Mittel, die dazu angepasst sind, während des Signierverfahrens zusätzlich zu einem Hash des signierten Fragments selbst ein Hash des selben Fragments mit Ausnahme des binären Inhalts zu erzeugen, und/oder **durch** Verschlüsselungsmittel, die dazu angepasst sind, während des Verschlüsselungsverfahrens das Fragment selbst und das Fragment einschließlich lediglich der Referenz zu dem binären Inhalt anstelle des binären Inhalts zu verschlüsseln.

## Revendications

1. Procédé de traitement d'un message de protocole d'accès aux objets simples (SOAP) au sein d'un réseau, en particulier un réseau de protocole Internet (IP), dans lequel le message de protocole SOAP à base de langage de balisage extensible (XML) comporte un fragment présentant un contenu binaire, dans lequel le contenu binaire sera déplacé dans une pièce jointe de mécanisme d'optimisation de transmission de message (MTOM) du message de protocole SOAP, avec une référence résiduelle au contenu binaire dans le message de protocole SOAP, et dans lequel la pièce jointe sera signée et/ou chiffrée par un processus de signature et de chiffrement, respectivement ; **caractérisé en ce qu'**au cours du processus de signature, outre le hachage du fragment signé lui-même, le même fragment, à l'exclusion du contenu binaire, sera haché, et/ou au cours du processus de chiffrement, outre le chiffrement du fragment lui-même, le fragment incluant uniquement la référence au contenu binaire, au lieu du contenu binaire, sera chiffré.

2. Procédé selon la revendication 1, dans lequel au cours du processus de signature et/ou de chiffrement, le contenu binaire est présent dans le fragment sous la forme de texte codé, de préférence codé en base 64.

3. Procédé selon la revendication 1 ou 2, dans lequel, sur la base du fragment haché supplémentaire excluant le contenu binaire, un bloc supplémentaire sera créé afin d'être utilisé dans un protocole de transport.

4. Procédé selon la revendication 3, dans lequel le bloc supplémentaire est un bloc de transformation qui sera ajouté à un élément de transformation de la signature respective.

5. Procédé selon l'une quelconque des revendications 1 à 4, dans lequel, sur la base du fragment chiffré supplémentaire incluant uniquement la référence au contenu binaire, une propriété de chiffrement sera créée afin d'être utilisée dans un protocole de transport.

6. Procédé selon la revendication 5, dans lequel la propriété de chiffrement sera ajoutée à un bloc de chiffrement.

7. Procédé selon la revendication 5 ou 6, dans lequel la propriété de chiffrement est présente sous la forme de texte codé, de préférence codé en base 64.

8. Procédé selon l'une quelconque des revendications 1 à 7, dans lequel la référence au contenu binaire est une référence de spécification d'encapsulation optimisée XML/binaire (XOP).

9. Procédé selon l'une quelconque des revendications 1 à 8, dans lequel le message de protocole SOAP sera sérialisé pour un traitement de diffusion en continu en un seul passage côté serveur.

10. Procédé selon la revendication 9, dans lequel, au cours du traitement côté serveur, des calculs de valeurs de hachage seront mis en oeuvre en parallèle.

11. Procédé selon l'une quelconque des revendications 1 à 10, dans lequel un processus de sécurité des services Web (WS-Security) sera utilisé pour les processus de signature et/ou de chiffrement.

12. Procédé selon l'une quelconque des revendications 1 à 11, dans lequel le contenu binaire est une photo, une image médicale ou des fichiers binaires exécutables.

13. Réseau, en particulier un réseau de protocole Internet (IP), comportant un moyen pour traiter un message de protocole SOAP (protocole d'accès aux objets simples) à base de langage de balisage extensible (XML), dans lequel le message de protocole SOAP comporte un fragment présentant un contenu binaire, dans lequel ledit moyen de traitement est apte à déplacer le contenu binaire dans une pièce jointe de mécanisme d'optimisation de transmission de message (MTOM) du message de protocole SOAP, avec une référence résiduelle au contenu binaire dans le message de protocole SOAP, et à signer et/ou chiffrer la pièce jointe par le biais d'un processus de signature et de chiffrement, respectivement ;
**caractérisé par** un moyen de hachage, apte à générer, au cours du processus de signature, outre un hachage du fragment signé lui-même, un hachage du même fragment, à l'exclusion du contenu binaire, et/ou par un moyen de chiffrement apte à chiffrer, au cours du processus de chiffrement, le fragment lui-même, et à chiffrer le fragment incluant uniquement la référence au contenu binaire, au lieu du contenu binaire.
